**Europäisches Patentamt**

**European Patent Office**

**Office européen des brevets**

(19)

(11) Veröffentlichungsnummer: **0 373 234**
**A1**

(12) ## EUROPÄISCHE PATENTANMELDUNG

(21) Anmeldenummer: **88120735.1**

(51) Int. Cl.⁵: **F24J 2/52, H01L 31/042**

(22) Anmeldetag: **12.12.88**

(43) Veröffentlichungstag der Anmeldung:
**20.06.90 Patentblatt 90/25**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Stein, Karl-Ulrich, Dr.**
**Isartalstrasse 14**
**D-8025 Unterhaching(DE)**

(54) **Solargenerator.**

(57) Ein Solargenerator mit Solarzelleneinrichtungen
(1) und mit Seilen (2) zur Halterung der Solarzelleneinrichtungen (1) soll einen einfachen Aufbau aufweisen. Die Seile (2) sind vernetzt. Die Solarzellen weisen eine Neigung mit einem Neigungswinkel alpha
von weniger als 90° bezüglich der Erdhorizontalen
(3) auf.

FIG 5

EP 0 373 234 A1

## Solargenerator

Die Erfindung betrifft einen Solargenerator nach dem Oberbegriff des Anspruchs 1.

Ein solcher Solargenerator ist beispielsweise aus der DE-OS 30 49 331 bzw. aus der DE-OS 35 00 694 bekannt. Dieser bekannte Solargenerator besitzt ebenflächige Platten zur Aufnahme von Halbleitersolarzellen. Dabei ist an einem turmähnlichem Gebilde ein Ausleger zur Halterung der Platten angeordnet, das mit einem durch die auf die Halbleitersolarzellen auftreffende Strahlung regelbaren Antrieb zur zweiachsigen Sonnennachführung verbunden ist. Dabei ist der Ausleger als an seinem einen Einspann-Ende um seine senkrechte Achse drehbares Teil ausgebildet. Die Ausleger sind unterhalb der Turmspitze angeordnet und durch Halteseile mit dem Turm verbunden. Bei diesem bekannten Solargenerator sind die Platten zur Aufnahme von Halbleitersolarzellen immer in einem entsprechenden Abstand untereinander aufgehängt.

Bei diesem bekannten Solargenerator ist die Einrichtung zur Sonnennachführung aufwendig und anfällig gegen Störungen. Der bei dem bekannten Solargenerator erforderliche Ausleger verursacht ebenfalls eine komplizierte und teuere Vorrichtung.

Der vorliegenden Erfindung liegt die Aufgabe zugrunde, einen Solargenerator der eingangs genannten Art anzugeben, der einen vergleichsweise einfachen Aufbau aufweist.

Diese Aufgabe wird erfindungsgemäß durch einen Solargenerator nach dem Anspruch 1 gelöst.

Ausgestaltungen und Vorteile der Erfindung sind in den Unteran sprüchen, der Beschreibung und der Zeichnung dargestellt.

Bei einem Solargenerator nach der Erfindung kann insbesondere auf Ausleger verzichtet werden.

Durch die schräge Anordnung von Solarzellen bezüglich der Erdhorizontalen kann auf eine Sonnennachführung verzichtet werden.

Ein Solargenerator nach der Erfindung kann sowohl an einem einzelnen Hang als auch zwischen verschiedenen Hängen als auch in der Ebene als auch in einer Kombination von Hang und Ebene angeordnet werden. Ein Solargenerator nach der Erfindung kann bei geeigneten örtlichen Verhältnissen lediglich mit Hilfe von Verankerungen unter Verzicht auf jegliche Stütze angeordnet werden. Ein Solargenerator nach der Erfindung kann jedoch auch vorteilhafterweise in einer Ebene mit Hilfe von unterschiedlich hohen Stützen angeordnet werden.

Die Seile der Seilvernetzung können ähnlich wie bei einer Hängebrücke angeordnet sein. Die Seile der Seilvernetzung dienen mindestens zur Längsstabilisierung, evtl. auch zur Längs- und Querstabilisierung. Die Querstabilisierung und Vernetzung der Seile kann auch durch die Solarzelleneinrichtungen selbst erfolgen.

Vorteilhafterweise sind die Solarzelleneinrichtungen so bezüglich der Erdhorizontalen geneigt, daß auch ohne Sonnennachführung ein günstiger Wirkungsgrad bei der Erzeugung von elektrischem Strom je nach örtlicher Lage und je nach zeitlicher Verwendung erzielt wird.

Als Solarzelleneinrichtungen können alle Einrichtungen verwendet werden, die Solarzellen aufweisen und ausreichend mechanisch stabil sind. Beispielsweise können alle Solarmodule verwendet werden, die mechanisch ausreichend stabil sind. Solche Solarmodule können auf Druck oder auf Zug in der Seilvernetzung gehaltert werden. Als Solarzelleneinrichtungen können dabei auch einzelne Solarzellen verwendet werden, soweit sie ausreichend ` mechanisch stabil sind. Solarzellen und Solarmodule können beispielsweise ausreichend mechanisch stabil gestaltet werden durch eine beliebige Kombination von Substraten und/oder Superstraten und/oder Rahmeneinrichtungen.

Als Solarzelleneinrichtungen können beispielsweise Solarmodule verwendet werden, die in der Doppelglas-Technologie hergestellt sind. In der Doppelglas-Technologie werden solche Solarzellen zusammen mit ihrer elektrischen Beschaltung zwischen zwei Glasscheiben mit Hilfe von Kunststoff in flüssiger Form oder mit Hilfe von Thermoplast-Folienmaterial eingebettet.

Als Solarzelleneinrichtungen können auch Solarmodule verwendet werden, die in der Superstrat-Technik hergestellt worden sind. Dabei wird auf der Vorderseite eines Solarmoduls ebenfalls eine Glasscheibe zur Abdeckung verwendet, während die Rückseite des Solarmoduls aus Kunststoff-Folien, beispielsweise aus aluminiumbeschichteten Folien, aufgebaut ist. Zwischen Vorderseite und Rückseite des Solarmoduls sind wiederum die Solarzellen zusammen mit ihrer elektrischen Beschaltung mit Hilfe von Thermoplast-Folien eingebettet. Verfahren zur Herstellung von solchen Solarmodulen sind beispielsweise in den US-Patentschriften 4 067 764, 4 224 081, 4 231 807, 4 317 739, 4 433 200 und 4 401 839 angegeben.

Die Rahmung von Solarmodulen geschieht meist mit Profilen aus Aluminium oder Stahl, die beispielsweise mit Silicon abgedichtet sind. Diese Rahmung ist bei den hier eingesetzten Solarzelleneinrichtungen nicht zwingend erforderlich.

Die Solarzelleneinrichtungen können an den Seilen der Seilvernetzung mit Klammern befestigt werden.

Wegen der wetterabhängigen Belastung sollte die Seilvernetzung großzügig dimensioniert sein. Als Seile, als Isolatoren und als Tragstützen für die Seilvernetzung können Einrichtungen verwendet werden, wie sie zur Führung, insbesondere zur Überlandfüh rung, von Strom bekannt sind.

Bei großen Solargenerator-Anlagen sind die Solarzelleneinrichtungen in der Seilvernetzung vorteilhafterweise unter Druck gesetzt.

Vorteilhafterweise werden die Einrichtungen, mit denen die Solarzelleneinrichtungen in der Seilvernetzung gehalten sind, als elektrische Kontakte zur Stromführung verwendet.

Vorteilhafterweise werden Solarzelleneinrichtungen mit Hilfe von Glasscheiben oder mit Hilfe von Glasfasern mechanisch stabilisiert und mit Klemmen (Pratzen), wie sie in der Glastechnik zur Befestigung von Glasscheiben (insbesondere von Glasfassaden) üblich sind, in der Seilvernetzung gehaltert. Dabei können die mit solchen Klemmen versehenen Solarmodule einfach in das aufgespannte Seilnetz eingespannt werden. Dabei ist gewährleistet, daß kein Zug und keine Biegung auf das Glas ausgeübt werden.

Solarzelleneinrichtungen können in eine Seilvernetzung auch auf Zug eingespannt werden. Dabei werden elastische Einrichtungen zur Halterung der Solarzelleneinrichtungen im Seilnetz verwendet. Als elastische Einrichtungen können beispielsweise Federn verwendet werden. Vorteilhafterweise werden dabei die Seile der Seilvernetzung ebenfalls mit elastischen Einrichtungen, beispielsweise mit Federn, gespannt. Vorteilhafterweise werden insbesondere bei einer Halterung der Solarzelleneinrichtungen auf Zug in der Seilvernetzung Spannseile zur mechanischen Stabilisierung der Solarzelleneinrichtungen verwendet.

Vorteilhafterweise werden Solarzelleneinrichtungen mit Hilfe einer Dreipunktaufhängung in der Seilvernetzung gehaltert. Dies ermöglicht eine verwindungsarme Halterung von Solarzelleneinrichtungen.

Vorteilhafterweise wird die Seilvernetzung auch zur Stromführung von Strom, der in Solarzelleneinrichtungen erzeugt worden ist, verwendet. Dabei können die Seile in jeder Form so ausgestaltet sein, daß sie einerseits Strom führen können und daß sie andererseits zur Stabilisierung des Solargenerators beitragen. Beispielsweise können Aluminium-Seile verwendet werden. Wenn sich verschiedene stromführende Seile kreuzen, können an diesen Knoten Isolierelemente je nach der dort vorhandenen elektrischen und mechanischen Spannung verwendet werden. Solche Isolierelemente sind beispielsweise für hohe Spannungen aus der Technik der Überlandleitungen bekannt. Solche Isolierelemente können aus Porzellan oder aus Kunststoff oder aus sonst verwendbarem Material bestehen. In die Seilvernetzung können auch supraleitende Materialien zur Führung von großen Strömen integriert werden.

Es können auch alle Seile der Seilvernetzung zur Stromführung verwendet werden.

Die Solarzelleneinrichtungen können parallel, seriell oder auch in einer Kombination von Parallel- und Serienschaltung angeordnet werden.

Bei einem Solargenerator nach der Erfindung können alle geeigneten Plätze innerhalb der Seilvernetzung mit Solarzelleneinrichtungen belegt werden. Wenn einige dieser Plätze nicht mit Solarzellen belegt werden, ist der Durchzug von Wind durch diese freigelassenen Plätze möglich. Dadurch ist der Solargenerator stabiler gegen Wettereinflüsse. Vorteilhafterweise werden Solarzelleneinrichtungen schachbrettartig innerhalb der Seilvernetzung angeordnet. Dadurch kann Sonnenlicht auch auf die unterhalb des Solargenerators sich befindliche Erdoberfläche auftreffen. Dies ist ökologisch günstig, weil dadurch Pflanzenwuchs begünstigt wird und Erosion des Landes verhindert wird. Außerdem kann sich an der Unterseite der Solarzelleneinrichtungen Kondenswasser bilden, was für das Wachstum von Pflanzen, insbesondere Büschen, insbesondere in geographischen Lagen mit trokkenem Klima, günstig ist.

Als Seile können auch Kunststoffseile oder kombinierte Metall-/ Kunststoff-Seile verwendet werden, die elektrisch leitend oder elektrisch isolierend sein können. An den Punkten, wo sich verschiedene Seile kreuzen, können die Seile ineinander verwoben sein oder mit Hilfe von Einrichtungen aneinander vollständig fixiert sein oder beispielsweise mit Hilfe von Hülsen wenigstens in einer räumlichen Dimension aneinander fixiert sein. Diese letzte Möglichkeit gibt der Seilvernetzung bei geeigneten Umständen eine größere Elastizität beispielsweise gegenüber Wind und Wärme.

Bei einem Solargenerator nach der Erfindung kann elektrischer Strom auch unabhängig von der Seilvernetzung von den Solarzelleneinrichtungen weggeführt werden.

Vorteilhafterweise werden jedoch bei einem Solargenerator nach der Erfindung Solarzelleneinrichtungen verwendet, die Strom in die Seilvernetzung einspeisen können. Dieser Strom kann mit Hilfe von zusätzlichen elektrischen Leitungen aus den Solarzelleneinrichtungen in die Seilvernetzung eingespeist werden. Vorteilhafterweise wird jedoch Strom aus den Solarzelleneinrichtungen über die Einrichtungen zur Halterung der Solarzelleneinrichtungen in der Seilvernetzung in diese Seilvernetzung eingespeist. Vorteilhafterweise werden dabei Solarzelleneinrichtungen verwendet, die mit einem Minimum an elektrischer Verdrahtung auskommen. Beispielsweise können Solarzellen mit Hilfe von einem Substrat oder Superstrat mechanisch stabilisiert werden, wobei das Substrat bzw. das Superstrat elektrisch leitfähige Bereiche wie Metallisierungen oder elektrisch leitfähige Kunststoffe zur elektrischen Verbindung zwischen Solarzellen und Solarzellen bzw. Solarzellen und elektrisch leitfähiger Halterung zur Befestigung der mechanisch stabilisierten Solarzellen in der Seilvernetzung aufweisen.

Die Erfindung wird im folgenden anhand der Zeichnung näher erläutert.

FIG 1 bis 6 erläutern das Prinzip der Erfindung

FIG 7 bis 11 erläutern Solarzelleneinrichtungen, die für die Erfindung verwendbar sind.

FIG 12 bis 15 zeigen mögliche Schaltungen bei einem Solargenerator nach der Erfindung.

FIG 16 bis 24 erläutern mögliche Halterungen für Solarzelleneinrichtungen bei einem Solargenerator nach der Erfindung.

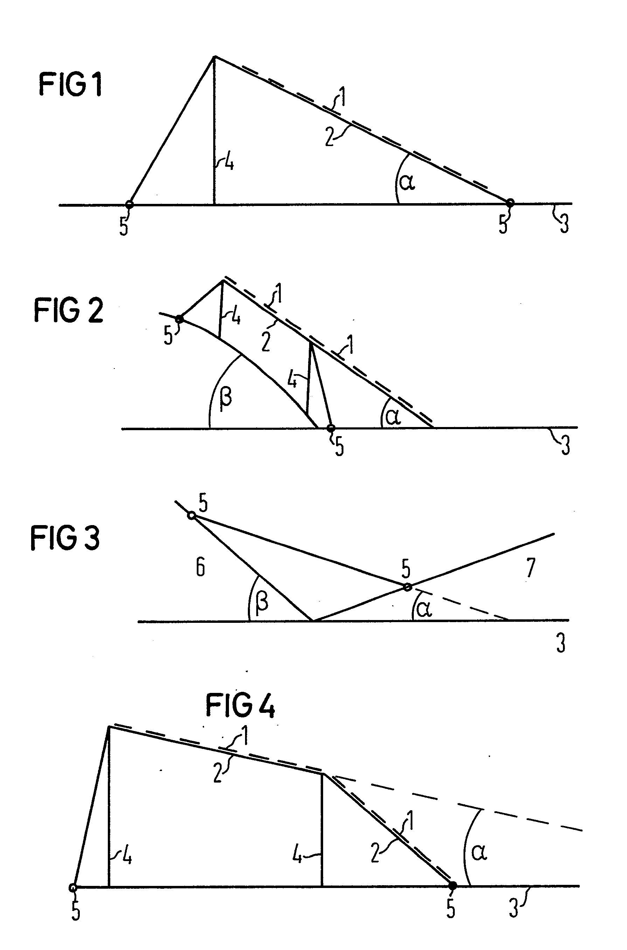

FIG 1 bis 6 erläutern das der Erfindung zugrundeliegende Prinzip. In den FIG 1 bis 5 bilden sowohl die Solarzelleneinrichtungen 1 als auch die Seilvernetzung 2 einen Winkel alpha mit der Erdhorizontalen 3. Die Seilvernetzung 2 ist mit Hilfe von Drahtstützen 4 und mit Hilfe von Verankerungen 5 in dieser Position gehalten. Als Drahtstützen 4 können Konstruktionen verwendet werden, wie sie bei der Führung von Strom mit Hilfe von Überlandleitungen bekannt sind. Als Seile können ebenfalls Seile verwendet werden, wie sie bei der Führung von Strom im Rahmen von Überlandleitungen bekannt sind.

In FIG 1 ist ein Solargenerator in der Ebene angeordnet. In FIG 2 ist der Solargenerator an einem Hang angeordnet. Dieser Hang weist einen Winkel beta mit der Erdhorizontalen 3 auf. Dieser Winkel beta kann verschieden vom Winkel alpha sein. Durch Verwendung von verschieden langen Drahtstützen 4 kann bei einem Solargenerator nach FIG 2 ein optimaler Winkel alpha für eine optimale Nutzung der auftreffenden Sonnenenergie verwirklicht werden.

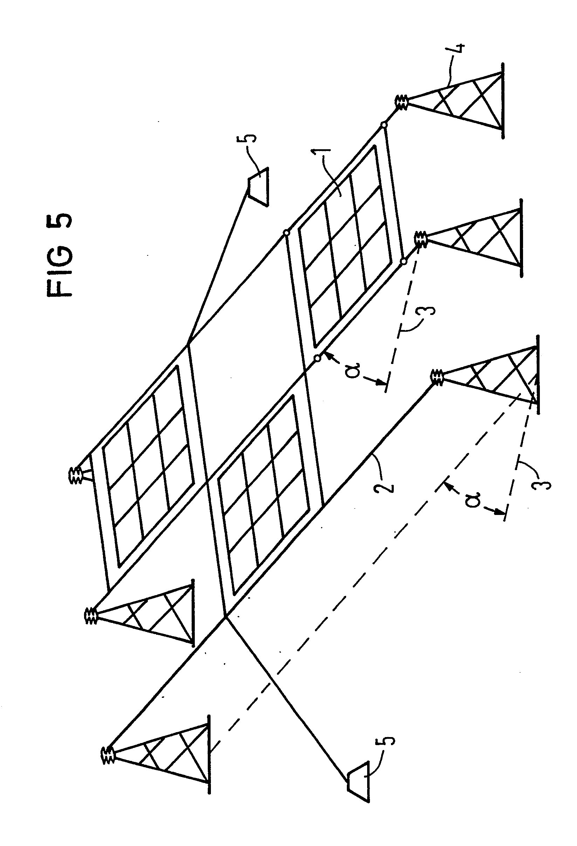

FIG 3 zeigt einen Solargenerator, der zwischen zwei Hängen 6, 7 nur mit Hilfe von Verankerungen 5 und unter Verzicht auf Tragstützen 4 angeordnet ist.

FIG 4 zeigt, daß auch in der Ebene mit Hilfe von unterschiedlich langen Drahtstützen 4 in unterschiedlicher Höhe zur Erdoberfläche ein Neigungswinkel alpha verwirklicht werden kann.

Optimale Neigungswinkel alpha sind abhängig von der geographischen Lage des Solargenerators und von dem Zeitraum, über den hinweg während eines Jahres der Solargenerator betrieben werden soll.

FIG 5 zeigt perspektivisch einen Solargenerator nach der Erfindung an einem Hang. Die Solarzelleneinrichtungen 1 sind parallel zum Hang ausgerichtet und bilden daher ebenso wie der Hang einen Winkel alpha mit der Erdhorizontalen 3.

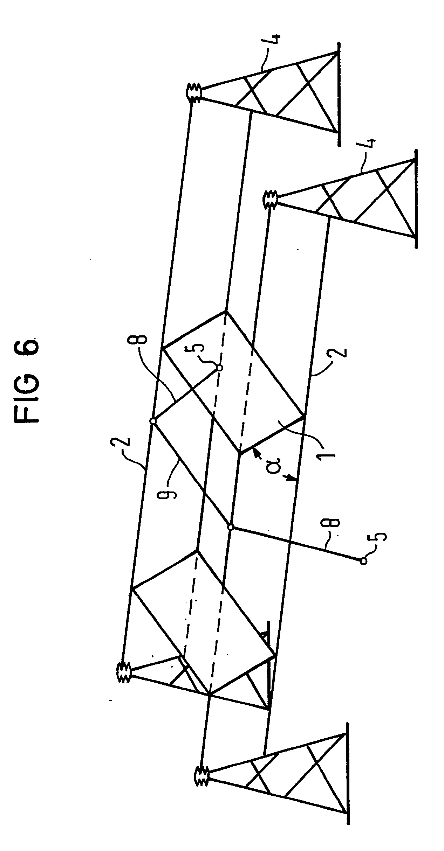

In FIG 6 ist gezeigt, daß bei einem Solargenerator auch Seile in verschiedenen Ebenen gespannt werden können, die einen Abstand zueinander aufweisen. Zwischen diesen Ebenen können Solarzelleneinrichtungen 1 so aufgehängt werden, daß nur diese Solarzelleneinrichtungen 1 einen Neigungswinkel alpha bezüglich der Erdhorizontalen 3 aufweisen. Eine solche Anordnung nach FIG 6 hat den Vorteil, daß beispielsweise in der Ebene gleich hohe Tragstützen 4 verwendet werden können. Dabei können die Ebenen, in denen die Seile 2 angeordnet sind, parallel zur Erdhorizontalen 3 verlaufen. Die Längsstabilisierung wird durch Seile 2 zwischen den Tragstützen 4 erzielt. Die Querstabilisierung wird durch Seile 8 von den Seilen 2 zu Verankerungen 5 erzielt. Werden zusätzlich zwischen den Seilen 2, die zwischen den Tragstützen 4 verlaufen, Seile 9 fest verspannt, so können die Solarzelleneinrichtungen 1 auf Druck gehalten werden. Sind solche Seile 9 zwischen den Seilen 2, die zwischen Drahtstützen 4 verlaufen, gar nicht vorgesehen oder nur lose befestigt, können die Solarzelleneinrichtungen 1 auf Zug gehalten werden.

Bei allen Ausführungsformen eines Solargenerators kann die Vernetzung der Seile mit Hilfe von Halterungen, mit denen Solarzelleneinrichtungen gehaltert sind, bewirkt werden, beispielsweise mit Hilfe von Klemmen, Pratzen, Rohrschellen, Federn, U-förmigen Profilteilen usw.

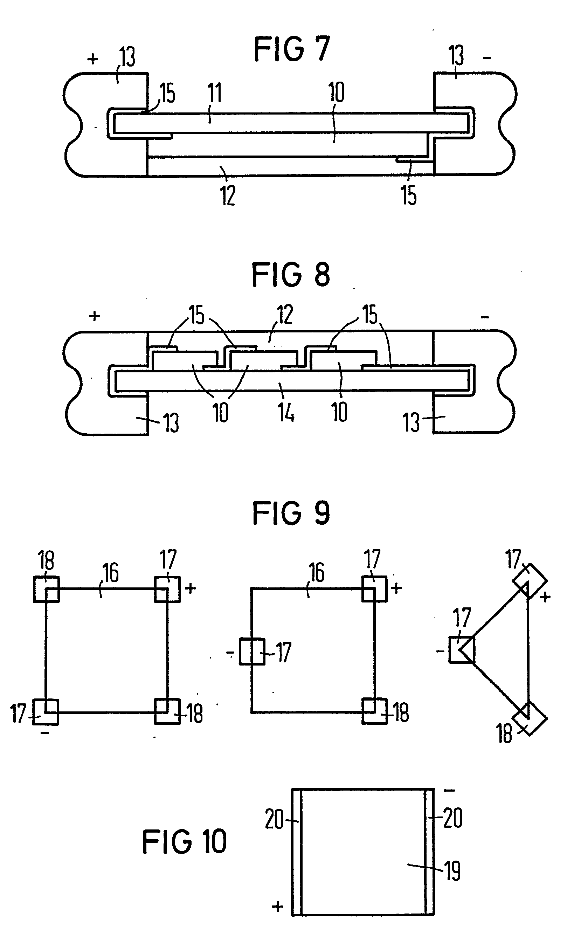

FIG 7 bis 11 erläutern Solarzelleneinrichtungen, wie sie für die Erfindung verwendbar sind. Als Solarzelleneinrichtungen können sowohl Solarzellenmodule als auch einzelne Solarzellen verwendet werden. In FIG 7 ist eine einzige Solarzelle 10 gezeigt, die mechanisch stabilisiert ist durch Anbringen einer Glasscheibe 11. Die Glasscheibe 11 zusammen mit der Solarzelle 10 ist dabei mit zwei Klemmen 13 versehen. Die beiden Klemmen 13 sind elastisch auf die Glasscheibe 11 gedrückt oder auf die Glasscheibe 11 aufgesetzt und verschraubt. Für die Klemmen 13 können Klemmen verwendet werden, wie sie in der Glastechnik zur Befestigung von Brüstungsgläsern, Glastüren, Glasfassaden u.ä. üblich sind. Die Klemmen 13 können auch aus elektrisch leitfähigem Kunststoff bestehen. Die Klemmen 13 sind über elektrische Verbindungen 15 direkt mit der Solarzelle 10 elektrisch verbunden. Die elektrischen Verbindungen 15 können elektrisch leitfähige Folien oder elektrisch leitfähige Metallisierungen oder elektrisch leitfähige Kunststoffbereiche sein.

FIG 8 zeigt ein Solarmodul, das ähnlich wie die Solarzelleneinrichtung nach FIG 7 aufgebaut ist. Das Solarmodul nach FIG 8 besitzt mehrere Solarzellen 10. Anstelle der Glasscheibe 11 ist in FIG 8 ein Substrat 14 (Leiterplatte) vorgesehen. Die Solarzellen 10 in FIG 7 und 8 können mit Kunststoff 12 bedeckt sein.

FIG 9 zeigt drei Solarmodule 16, die Klemmen 17 als elektrische Kontakte aufweisen. Die Klemmen 18 sind bezüglich der Solargeneratorspannung elektrisch isoliert. Die Klemmen 17 und 18 können dabei Eckpratzen sein, wie sie in der Glastechnik üblich sind. Sollen die Solarmodule 16 auf Druck in die Seilvernetzung eingesetzt werden, weisen die Klemmen 17, 18 auf den vom Solarmodul 16 abgewandten Seiten U-förmiges Profil auf.

FIG 10 zeigt ein Solarmodul 19, das zwei Rahmenteile 20 besitzt, die sowohl zur Halterung des Solarmoduls 19 in der Seilvernetzung als auch als elektrische Kontakte des Solarmoduls 19 dienen. Die Querschnitte der Rahmenteile 20 können dabei so groß dimensioniert werden, daß sie leicht die im Solarmodul 19 erzeugten hohen elektrischen Ströme aufnehmen. Damit kann eine Verringerung der modulinternen Verschaltungen erzielt werden. Die Solarmodule 19 können direkt miteinander verschaltet werden.

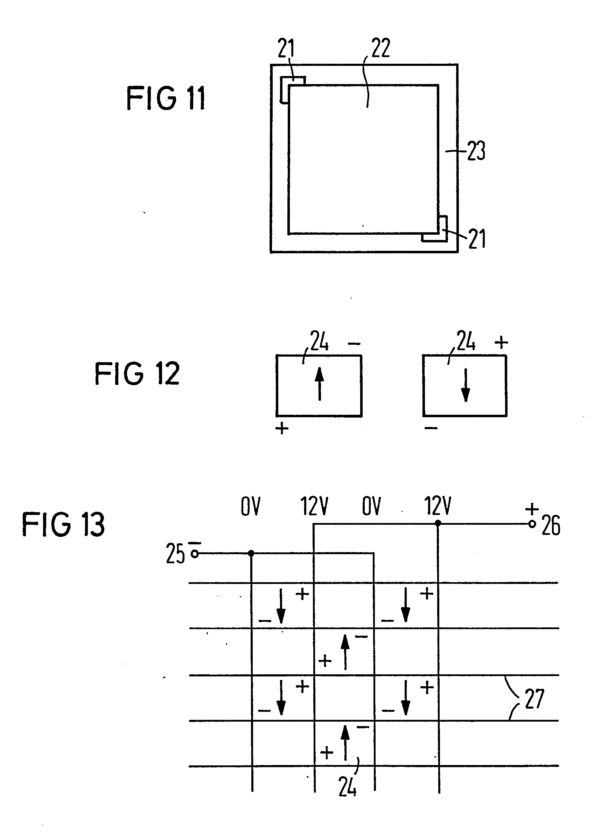

FIG 11 zeigt ein Solarmodul 19 nach FIG 10, bei dem noch keine Rahmenteile 20 angebracht sind. Die in der FIG 11 nicht dargestellten Solarzellen sind mit einer Thermoplast-Folie 22 bedeckt. Die mechanische Stabilisierung des Solarmoduls 19 wird durch die Glasscheibe 23 erzielt. Die elektrische Verbindung zwischen den Solarzellen des Solarmoduls 19 und den Rahmenteilen 20 wird durch metallisierte Flächen 21 auf dem Glas 23 erzielt.

FIG 12 bis 15 erläutern mögliche Schaltungen bei einem Solargenerator.

FIG 12 zeigt symbolisch zwei Solarmodule 24 mit symbolischer Angabe von Pluspol und Minuspol.

FIG 13 zeigt eine Parallelschaltung von schachbrettartig angeordneten Solarmodulen 24. Im Beispiel nach FIG 13 besitzt ein Solarmodul 24 eine Generatorspannung von 12 V. Am Minuspol 25 der Schaltung nach FIG 13 liegen dabei 0 V, am Pluspol 26 liegen 12 V an. Die Seile 27 der Anordnung nach FIG 13 sind unbeschaltet. Die Solarmodule 24 sind schachbrettartig angeordnet.

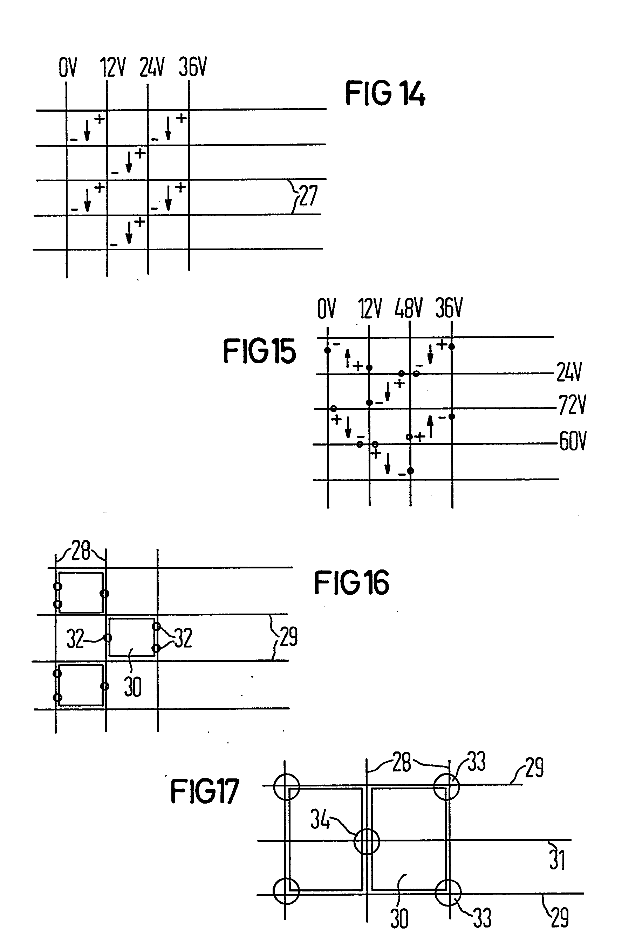

FIG 14 zeigt eine Reihenschaltung von Solarmodulen 24. Die von oben nach unten führenden Seile weisen dabei Spannungen von 0 V, 12 V, 24 V usw. auf. Die in der FIG 14 quer verlaufenden Seile 27 sind wiederum unbeschaltet.

FIG 15 zeigt eine Anordnung von Solarmodulen 24, bei denen sowohl längs als auch quer verlaufende Seile beschaltet sind.

FIG 16 bis 23 erläutern die Halterung von Solarzelleneinrichtungen in Seilvernetzungen. FIG 16 zeigt eine Seilvernetzung, bei der längs verlaufende Seile 28 und quer verlaufende Seile 29 vorhanden sind. Dabei sind wiederum Solarmodule 30 schachbrettartig angeordnet. Die Solarmodule 30 sind an drei Punkten 32 mit Hilfe der Seilvernetzung aufgehängt. Keiner der drei Punkte 32 muß dabei exakt an einer Ecke des Solarmoduls 30 positioniert sein.

FIG 17 zeigt ebenfalls längs verlaufende Seile 28 und quer verlaufende Seile 29. Zusätzlich sind noch quer verlaufende Seile 31 zwischen jeweils zwei quer verlaufenden Seilen 29 vorgesehen. Die Solarmodule 30 sind mit zwei Punkten 33 an zwei Kreuzungspunkten der Seile 28 und 29 und mit einem Punkt 34 an einem Kreuzungspunkt zwischen den Seilen 28 und 31 gehalten.

Die Solarmodule 30 sind bei den Anordnungen nach den FIG 16 und 17 mit einer Dreipunktaufhängung gehalten. Dabei können die Solarmodule 30 in die Seile durch Druck gepreßt sein oder in den Seilen auf Zug gehalten sein.

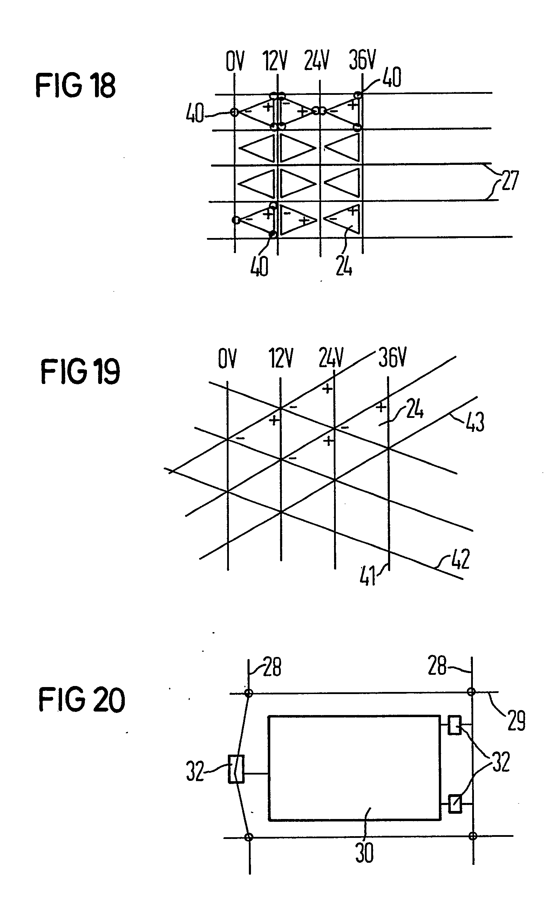

FIG 18 und 19 zeigen Dreipunktaufhängungen von dreieckigen Solarmodulen 24. Diese dreieckigen Solarmodule 24 können parallel und seriell geschaltet werden. FIG 18 zeigt eine Serienschaltung von dreieckigen Solarmodulen 24 ähnlich zu FIG 14. Wenn die Seile der Seilvernetzung quer zueinander angeordnet sind, können die dreieckigen Solarmodule 24 an drei Punkten 40 so aufgehängt sein, daß jeweils in jedem zwischen Seilen definierten freien Raum ein Solarmodul 24 angeordnet ist. Wegen der Dreiecksform der Solarmodule 24 verbleibt freier Raum zwischen verschiedenen Solarmodulen 24, so daß ungehindert Wind und Licht durch den Solargenerator hindurchdringen können.

FIG 19 zeigt Seile 41, 42, 43, die unter solchen Winkeln zueinander vernetzt sind, daß die freien Räume zwischen den verschiedenen Seilen Dreiecke bilden. Dabei sind dreieckige Solarmodule 24 so angeordnet, daß jeweils zwischen drei Solarmodulen 24 ein Dreieck verbleibt, das nicht mit einem Solarmodul belegt wird. Diese Belegung mit dreieckigen Solarmodulen 24 ist analog zur schachbrettartigen Belegung nach FIG 14. In diesem Zusammenhang ist eine schachbrettartige Belegung der Seilvernetzung 2 mit Solarzelleneinrichtungen 1 so zu verstehen, daß zwischen verschiedenen Solarmodulen 24 immer wieder ein freier Platz verbleibt, so daß Wind und Licht in ausreichendem Maße hindurchdringen können, ohne daß die Stabilität des Solargenerators in untragbarer Weise beeinflußt werden würde.

Solarmodule 24 können beliebige geometrische Formen aufweisen. Ebenso können die Seile der Seilvernetzung 2 in beliebiger Weise zueinander angeordnet sein. Grundbedingung ist eine ausreichende mechanische Stabilität des Solargenerators.

FIG 20 zeigt ein Solarmodul 30, das an den drei Punkten 32 in den Seilen 28 und 29 gehalten

ist.

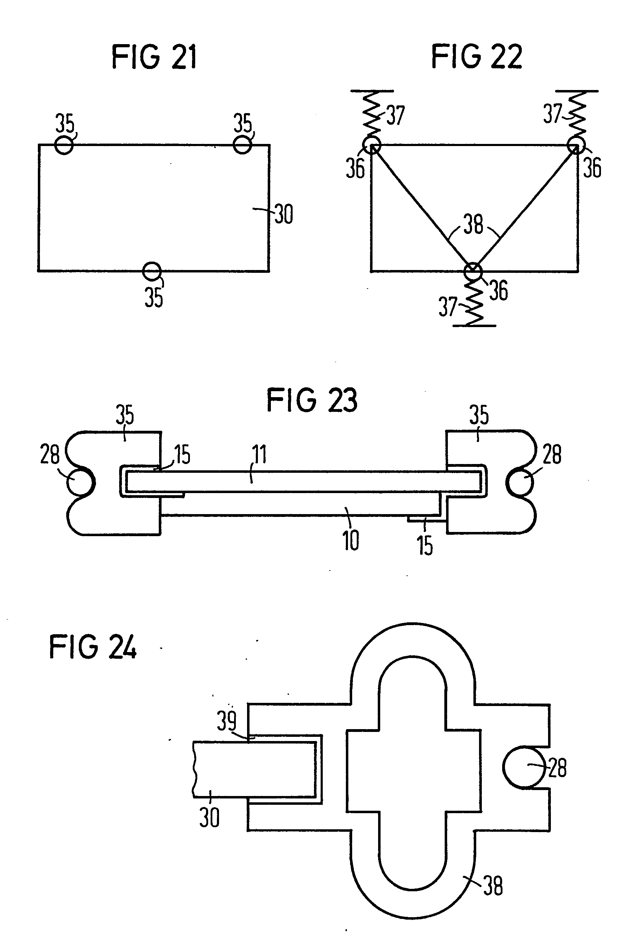

FIG 21 zeigt schematisch ein Solarmodul 30 mit drei Halterungen 35, mit deren Hilfe das Solarmodul 30 an drei Punkten in eine Seilvernetzung eingepreßt wird.

FIG 24 zeigt ein Solarmodul 30 mit drei Halterungen 36. Zwischen den Halterungen 36 sind Spannseile 38 gezogen. Die Halterungen 36 werden mit Hilfe von elastischen Elementen (Federn) 37 auf Zug in Seilvernetzungen eingehängt.

FIG 23 zeigt ein Solarmodul bzw. eine einzelne Solarzelle ähnlich zu FIG 21 mit zwei Klemmen 35. Die Solarzelleneinrichtung nach FIG 23 besitzt wenigstens eine Solarzelle 10, eine Glasscheibe 11 und elektrische Verbindungen 15. Mit Hilfe der Halterungen 35 ist die Solarzelleneinrichtung in Seile 28 auf Druck eingepreßt.

FIG 24 zeigt eine Klemmeinrichtung 38 zum Einpressen eines Solarmoduls 30 in Seile 28 unter Druck. Dabei ist das Seil 28 in einem U-förmigen Profil der Halterung 38 angeordnet. Dabei ist das Solarmodul 30 elastisch aufgehängt durch Druck der Seile 28. Zur besseren elektrischen Kontaktierung zwischen Solarmodul 30 und Halterung 38 geht eine elektrisch leitfähige Folie 39, beispielsweise aus Kupfer, um dasjenige U-förmige Profil der Halterung 38 herum, in das das Solarmodul 30 vorzugsweise elastisch eingepreßt ist.

Wenn Solarmodule 30 in ein Seilnetz eingespannt sind, lastet weniger Spannung, beispielsweise auch bei Windbeanspruchung, auf dem Solarmodul 30. Daher kann beispielsweise billigeres Material zur Erzielung der mechanischen Stabilität des Solar moduls verwendet werden. Beispielsweise kann eine billigere Glasscheibe 11 verwendet werden.

Wenn Solarmodule 30 unter Zug in der Seilvernetzung aufgehängt werden, werden mit Hilfe von Federn die Seile beispielsweise an den Verankerungen 5 und an den Tragstützen 4 gespannt.

Ein Solargenerator nach der Erfindung kann als Solarkraftwerk in jeder Größe von kleinsten Leistungen bis zu Höchstleistungen, zumindest im oberen Megawattbereich, verwendet werden.

Für einen Solargenerator nach der Erfindung genügt es bereits, daß nur Zeile 2 zur Längsstabilisierung vorhanden sind. Die erforderliche Querstabilisierung und damit die Vernetzung der Seile 2 kann dann dadurch erfolgen, daß in den Seilen 2, die dann insgesamt nur in Längsrichtung verlaufen, Solarzelleneinrichtungen 1 gehalten sind. Beispielsweise sind bei einem Solargenerator, der ähnlich zu einem Solargenerator nach FIG 5 ist, die Seile 2 auch dann vernetzt, wenn keine querverlaufenden Seile vorhanden sind. Darüber hinaus sind bei einem Solargenerator auch die Verankerungen 5 in Querrichtung, wie sie in FIG 5 gezeigt sind, nicht unbedingt erforderlich. Darüber hinaus kann bei einem Solargenerator nach der Erfindung auf jegliche zusätzliche Verankerungen verzichtet werden, soweit die erforderliche Stabilität bereits anderweitig erzielt werden kann.

**Ansprüche**

1. Solargenerator mit Solarzelleneinrichtungen (1) und mit Seilen (2) zur Halterung der Solarzelleneinrichtungen (1), **dadurch gekennzeichnet,** daß die Seile (2) vernetzt sind und daß die Solarzellen eine Neigung mit einem Neigungswinkel (alpha) von weniger als 90° bezüglich der Erdhorizontalen (3) aufweisen.

2. Solargenerator nach Anspruch 1, **dadurch gekennzeichnet,** daß der Neigungswinkel größer als 10° und kleiner als 80° ist.

3. Solargenerator nach Anspruch 2, **dadurch gekennzeichnet,** daß der Neigungswinkel größer als 20° und kleiner als 70° ist.

4. Solargenerator nach einem der Ansprüche 1 bis 3, **dadurch gekennzeichnet,** daß die Vernetzung der Seile (2) durch die Solarzelleneinrichtungen (1) bewirkt ist.

5. Solargenerator nach einem der Ansprüche 1 bis 4, **dadurch gekennzeichnet,** daß Seile (2) eine Neigung mit einem Neigungswinkel von weniger als 90° bezüglich der Erdhorizontalen (3) aufweisen.

6. Solargenerator nach Anspruch 5, **dadurch gekennzeichnet,** daß Seile (2) den selben Neigungswinkel (alpha) wie Solarzelleneinrichtungen (1) bezüglich der Erdhorizontalen (3) aufweisen.

7. Solargenerator nach einem der Ansprüche 1 bis 6, **dadurch gekennzeichnet,** daß Seile der Seilvernetzung gespannt sind.

8. Solargenerator nach einem der Ansprüche 1 bis 7, **da durch gekennzeichnet,** daß Solarzelleneinrichtungen (1) unter Druck in der Seilvernetzung gehaltert sind.

9. Solargenerator nach einem der Ansprüche 1 bis 8, **dadurch gekennzeichnet,** daß Solarzelleneinrichtungen (1) unter Zug in der Seilvernetzung gehaltert sind.

10. Solargenerator nach einem der Ansprüche 1 bis 9, **gekennzeichnet durch** eine Befestigung an mindestens einem Hang (6, 7) mit Verankerungseinrichtungen (5).

11. Solargenerator nach einem der Ansprüche 1 bis 10, **gekennzeichnet durch** eine Befestigung in der Ebene mit Tragstützen (4) und Verankerungseinrichtungen (5).

12. Solargenerator nach Anspruch 9 oder 10, **gekennzeichnet durch** eine Befestigung mit unterschiedlich hohen Tragstützen (4).

13. Solargenerator nach einem der Ansprüche 1 bis 12, **gekennzeichnet durch** eine schachbrettartige Belegung mindestens eines Teils der Seilvernetzung mit Solarzelleneinrichtungen (24).

14. Solargenerator nach einem der Ansprüche 1 bis 13, **gekennzeichnet durch** eine Dreipunktaufhängung von Solarzelleneinrichtungen.

15. Solargenerator nach Anspruch 14, **gekennzeichnet durch** dreieckige Solarzelleneinrichtungen.

16. Solargenerator nach einem der Ansprüche 1 bis 15, **gekennzeichnet durch** mechanische Stabilisierung von Solarzelleneinrichtungen mit Glas.

17. Solargenerator nach einem der Ansprüche 1 bis 16, **gekennzeichnet durch** Verwendung der Seilvernetzung zur Stromführung.

18. Solargenerator nach Anspruch 12, **gekennzeichnet durch** Parallelschaltung von Solarzelleneinrichtungen.

19. Solargenerator nach Anspruch 17 oder 18, **gekennzeichnet durch** Serienschaltung von Solarzelleneinrichtungen.

20. Solarzelleneinrichtung mit einer elastischen Halteeinrichtung zur Befestigung auf Zug in einer Seilvernetzung.

21. Solarzelleneinrichtung mit einer elastischen Halteeinrichtung zur Befestigung auf Druck in einer Seilvernetzung.

FIG 1

FIG 2

FIG 3

FIG 4

# FIG 5

EP 0 373 234 A1

# FIG 6

EP 0 373 234 A1

88 P 1 8 0 4 E

## FIG 7

## FIG 8

## FIG 9

## FIG 10

88 P 1 8 0 4 E

FIG 11

21    22

23

21

FIG 12

24   −

24   +

+

−

FIG 13

0V    12V    0V    12V

+ 26

25

27

24

**FIG 14**

0V 12V 24V 36V

27

**FIG15**

0V 12V 48V 36V

24V
72V
60V

28

**FIG16**

32    32    29
30

29

**FIG17**

28    33    29
34
31
30    33    29

88 P 1 8 0 4 E

FIG 18

FIG 19

FIG 20

88 P 1 8 0 4 E

## FIG 21

## FIG 22

## FIG 23

## FIG 24

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 643 487 (ZERNA, SCHULTZ UND PARTNER) <br> * Spalte 3, Zeile 58 - Spalte 5, Zeile 15; Spalte 5, Zeilen 52-58; Figuren 1-3 * | 1-7,10-13,17 | F 24 J 2/52 <br> H 01 L 31/042 |
| Y | | 15,16, 18,19 | |
| A | | 8,9,14, 20,21 | |
| | --- | | |
| Y | US-A-3 369 939 (MYER) <br> * Spalte 3, Zeilen 8-17; Figur 15 * | 15 | |
| | --- | | |
| D,Y | US-A-4 231 807 (KEELING et al.) <br> * Spalte 1, Zeile 65 - Spalte 2, Zeile 5; Figur 4 * | 16 | |
| | --- | | |
| Y | PATENT ABSTRACTS OF JAPAN, Band 6, Nr. 91 (E-109)[969], 28. Mai 1982; & JP-A-57 26 477 (TAKENORI SOUMA) 12.02.1982 <br> * Zusammenfassung * | 18,19 | |
| | --- | | RECHERCHIERTE SACHGEBIETE (Int. Cl.5) |
| X | US-A-4 063 963 (BOND Jr.) <br> * Spalte 1, Zeile 58 - Spalte 2, Zeile 42; Figur 1 * | 1-6 | F 24 J <br> H 01 L |
| | --- | | |
| A | EP-A-0 060 975 (M.B.B. GmbH) <br> * Seite 2, Zeilen 2-6; Figur 1 * | 1 | |
| | --- | | |
| A | PATENT ABSTRACTS OF JAPAN, Band 9, Nr. 258 (E-350)[1981], 16. Oktober 1985; & JP-A-60 107 871 (TAIYOU KOGYO K.K.) 13-06-1985 <br> ---       -/- | 1,11 | |

Der vorliegende Recherchenbericht wurde für alle Patentansprüche erstellt

| Recherchenort | Abschlußdatum der Recherche | Prüfer |
|---|---|---|
| DEN HAAG | 08-08-1989 | BELTZUNG F.C. |

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 180 877 (GENERAL ELECTRIC CO.) * Seite 5, Zeile 6 - Seite 12, Zeile 15; Figuren 1-4 * ----- | 1,8,17-21 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 08-08-1989 | BELTZUNG F.C. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
Dokument

EPO FORM 1503 03.82 (P0403)